# EUROPEAN PATENT SPECIFICATION

(11) **EP 0 529 676 B1**
(45) Date of publication and mention of the grant of the patent: **13.12.1995**
(21) Application number: 92114868.0
(22) Date of filing: 31.08.1992
(51) Int. Cl.: F02B 31/00, F01L 3/06, F02D 9/16

(54) **Induction system for an internal combustion engine**
Einlasssystem für eine Brennkraftmaschine
Système d'admission pour un moteur à combustion interne

(30) Priority: 30.08.1991 JP 247015/91; 27.12.1991 JP 360129/91
(43) Date of publication of application: 03.03.1993
(73) Proprietor: YAMAHA HATSUDOKI KABUSHIKI KAISHA, Iwata-shi Shizuoka-ken, 438 (JP)
(72) Inventor: Isaka, Yoshiharu, c/o Yamaha Motor Co.Ltd., Iwata-shi, Shizuoka-ken 438 (JP); Ito, Masahiro, c/o Yamaha Motor Co.Ltd., Iwata-shi, Shizuoka-ken 438 (JP)
(74) Representative: Grünecker, Kinkeldey, Stockmair & Schwanhäusser Anwaltssozietät

(56) References cited:
- DE-A- 3 429 414
- DE-A- 3 638 021
- US-A- 4 317 438
- US-A- 4 320 725
- PATENT ABSTRACTS OF JAPAN vol. 10, no. 176 (M-491)(2232) 20 July 1986 & JP-A-61 25 916

## Description

This invention relates to an induction system for an internal combustion engine having a cylinder head and a cylinder block, said cylinder head at least partially defining a combustion chamber, and an intake passage arrangement for each cylinder to serve a plurality of intake valves, with a main throttle valve arrangement being provided at an upstream side of the intake passage arrangement.

As is well known, most internal combustion engines are called upon, in their application, to operate over widely varying speed and load ranges. This is particularly true in connection with vehicular applications such as automobiles and motorcycles. As is also well known, because of this speed and load variation over which the engine is operated, there are many compromises in the design of the engine. This is particularly true in the area of the induction system.

It has been well known that combustion at low engine speeds and low engine loads can be significantly improved with attendant improvements in fuel economy and exhaust emission control if a high degree of turbulence is induced into the intake charge and in the combustion chamber. However, all turbulence increasing devices in the induction system tend to offer some flow resistance. Therefore, the use of turbulence increasing devices in the induction system reduces the maximum power output of the engine. Thus, most induction systems are designed as compromise between good low speed performance and good high speed performance.

One form of turbulence which is generated in the combustion chamber is characterized as "swirl". Swirl is a flow of the charge in the combustion chamber in a generally circumferential direction around the axis of the cylinder. Swirl is generally generated by use of swirl ports in the induction system. However, the generation of swirl can reduce the volumetric efficiency at high speed. This is because swirl ports have higher flow resistance than non-swirl ports. In addition, there are some phases of running of the engine when swirl is not desirable even though some form of motion of the charge in the chamber is desirable.

Another form of motion in the combustion chamber is called "tumble". Tumble is a swirling motion of the intake charge about an axis that generally extends transversely to the cylinder bore axis. With such a flow arrangement, the charge tends to flow across the cylinder head, down one side of the cylinder bore, back across the cylinder bore across the top of the head of the piston and then up the other side of the cylinder bore back to the cylinder head with this flow pattern repeating. This type of motion also requires the formation of a specially formed port which will provide flow resistance and reduce volumetric efficiency under high speed. Like swirl, tumble is more effective at some speed than other speeds.

Of course, even more turbulence may be generated in the intake charge if both swirl and tumble can be generated at the same time. However, generating both such motions through a single port configuration can further increase the flow resistance and reduce high speed performance.

One way in which the flow pattern in the combustion chamber can be varied under varying speed and load conditions is to provide a control valve in the induction passage that changes the effective configuration of the induction passage as the control valve is moved. The control valve can then be moved in response to varying speed and load conditions so as to provide the desired flow pattern. Such arrangements, however, as previously proposed have only permitted the establishment of either one type of swirling motion (either swirl or tumble) or substantially no turbulence.

One technique for changing the flow pattern from an intake passage in an internal combustion engine employs an additional passage that intersects the main intake passage upstream of the valve seat and through which another higher velocity flow is established. However, like other flow altering devices, there are some running conditions when it is not desirable to have this small port be effective. This can be done through the provision of a control valve but if another control valve is also employed for changing the effective configuration of the port, then the engine becomes very complicated. Furthermore, it may be physically impossible to employ two such valves in the cylinder head of an engine, where the intake port is normally formed.

As has been noted, one way in which the flow patten within a combustion chamber may he altered is by providing a control valve that operates in the intake passage of the engine. However, where such a control valve is provided, even when the control valve is in a wide open position, some obstruction to the flow through the intake passage may occur. This can be either by direct flow resistance of the valve or a mounting portion of it extending into the induction passage even when the valve is fully opened. In addition, the control valve in its fully open position or some portion associated with it can give rise to a less than smooth intake passage which will induce turbulence within the intake passage itself and, accordingly, adversely effect volumetric efficiency.

US 4 317 438 shows an induction system of the above-mentioned type. This induction system is, however, unsatisfactory, as it has the above-mentioned drawbacks such as an unwanted flow resistance for some running conditions.

Moreover, in addition to providing swirl and tumble actions simultaneously it is desirable to improve the engine fuel consumption in the ranges of low to medium engine speed or engine load. In this way also a lean mixture combustion could be stabilised by improving the fuel atomisation and uniformised mixture distribution in order to improve the fuel consumption of the engine.

Accordingly, it is an objective of the present invention to provide an improved induction system for an internal combustion engine which permits the generation of swirl and or tumble depending on the running conditions of the engine allowing not only to selectively increase the turbulence of the charge in the combustion chamber under some running conditions while adjusting different flow patterns under other running conditions but should also improve stabilised lean mixture combustion in the low engine performance range.

According to the present invention, the above-mentioned objective is performed in that the intake passage arrangement is controlled by an intake air control valve for varying the cross section of the flow passage area of said intake passage arrangement, which is rotatably supported at the lower side of the intake passage arrangement in the cylinder head, the engine being considered in an upright position with the cylinder head at the top of it, the axis of the control valve extends transversely to the flow path of an intake charge flowing through the intake passage arrangement and in the direction of the axis of an overhead camshaft, said control valve being disposed at least in the vicinity of an end portion of the intake passage close to the combustion chamber, and in that, an auxiliary throttle valve is disposed between the main throttle valve and the control valve to control at least a part of the cross section of the intake passage arrangement, said auxiliary throttle valve being designed to prevent an obstruction of at least a part of the cross section of the intake passage irrespective of the angular position of the auxiliary throttle valve, but to obstruct the flow through a remainder part of the cross section of the intake passage in a fully closed position of the auxiliary throttle valve.

The induction system according to the present invention has the advantageous effect that, while the intake air amount is small, as is for example the case during the low to medium speed engine operating range, the auxiliary throttle valve partly closes the intake passage or primary and secondary sub-intake passages of a Siamese type intake passage arrangement, leaving only the remaining intake passage or sub-intake passage open and the intake air control valve is rotated to its closed position and throttles that intake passage or sub-intake passage on the bottom valve side of the flow passage which was left open by the auxiliary throttle valve. Under such a condition, the intake air flows along one side through the intake passage or one of the primary or secondary sub-intake passages on the side left open by the auxiliary throttle valve and in a one-sided orientation along the ceiling wall side of the intake passage. Consequently, the intake air will be blown into the combustion chamber producing horizontal swirl flowing from the intake valve opening on that side left open through the auxiliary throttle valve towards the upper side and, moreover, producing tumble action flowing downward from the ceiling wall side. Therefore, tumble and swirl is produced simultaneously and the atomisation of fuel as well as the uniformisation of the distribution of the air/fuel mixture are promoted.

According to a preferred embodiment of the present invention, a valve operating control system is provided to operate said control valve, which, most preferably, is disposed at a bight of the respective intake passage or at least one of primary or secondary sub-intake passages, and said valve operating control system is similarly provided to operate the auxiliary throttle valve, both of said control and auxiliary throttle valves are operated in response to engine running conditions such as to close said valves in the range of low to medium engine speed or engine load.

According to another preferred embodiment of the present invention the control valve comprises a plate-shaped valve body having control cutouts for controlling a plurality of sub-intake passages of a single cylinder of the engine.

In order to avoid that some vacancy which is generated on the downstream side of the control valve causing flow disturbances during low speed operation it is preferred that a rectifier plate arrangement (partition plate) is provided for dividing the portion of the intake passage downstream of the intake air control valve into a ceiling wall side portion and a bottom wall side portion. Said partition plate or rectifier plate arrangement has a plate portion which establishes a stop for the control valve rotated to its fully closed position. Within the framework of this arrangement it is also possible that the plate portion of the rectifier plate arrangement partitioning the intake passage is to make nearly contact with the control valve rotated to its fully closed position.

Other preferred embodiments of the present invention are laid down in the further sub-claims.

The latter-mentioned embodiments, namely the provision of a partition plate or rectifier plate arrangement downstream of the control valve which preferably is disposed at a bight of the associated portion of the intake passage close to a combustion chamber, further improves the tumble action of the charge in the combustion chamber as said area of the intake passage can be adjusted to show a small cross-section of the passage area thus increasing the speed of the charge introducing the intake air into the cylinder in a vertical direction and enabling the mixture to be combusted stablised. Moreover, said system allows a wide variability of adjusting the amount and distribution of the intake charge to meet specifically low load engine running conditions.

In the following the present invention is explained in greater detail by means of several embodiments in conjunction with the accompanying drawings:
Fig. 1 is an end elevational view of an internal combustion engine constructed in accordance with an embodiment of the present invention with portions broken away and showing a cross-section and certain portions of the engine eliminated and certain of its components shown schematically, representing a cross-section along the lines II-II in Fig. 2,
Fig. 2 is a sectional plane view showing an intake air control system according to Fig. 1,
Fig. 3 is a sectional view taken along the line III-III of Fig. 2,
Fig. 4 is a graphical view showing how the various valves are operated in conjunction with this embodiment in relation to valve opening and engine speed,
Fig. 5 is a sectional end view showing a modification of the arrangement and disposition of the auxiliary throttle valve, in part similar to Fig. 2,
Fig. 6 is an end elevational view of an internal combustion engine constructed in accordance with another embodiment of the present invention with portions broken away and showing cross-section and certain portions of the engine eliminated and certain of its controls shown sechematically, similar to Fig. 1,
Fig. 7 is a further enlarged view of the combustion chamber area of the engine and an intake valve taken along the same plane as of Fig. 1,
Fig. 8 is a cross-sectional view taken along the line III-III of Fig. 7,
Fig. 9 is an enlarged cross-sectional view taken along the line IV-IV of Fig. 6,
Fig. 10 is an enlarged perspective view showing a cooperation of the control valve with the rectifier plate arrangement,
Fig. 11 is a cross-sectional view, in part similar to Fig. 7, showing another embodiment of the present invention,
Fig. 12 is a cross-sectional view taken along the line VII-VII of Fig. 11,
Fig. 13 is a perspective view, in part similar to Fig. 10, showing the cooperation of the control valve with the rectifier plate of said embodiment,
Fig. 14 is a side elevational view of an internal combustion engine constructed in accordance with another embodiment of the present invention with a portion broken away, and
Fig. 15 is a cross-sectional view taken along the line IX-IX of Fig. 14.

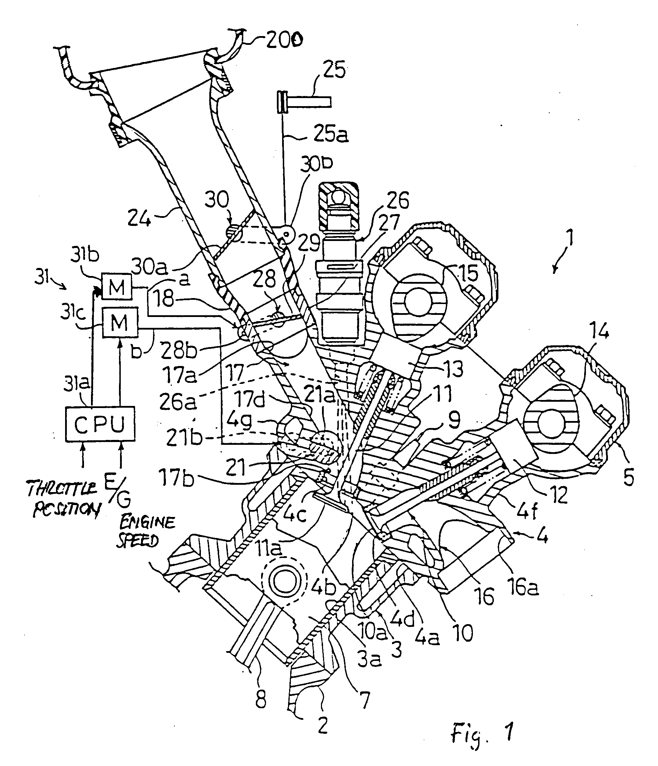

Referring first to the embodiment of Figs. 1 to 4 and initially primarily to Fig. 1, an internal combustion engine constructed in accordance with this embodiment of the invention is illustrated partially and is identified primarily by the reference numeral 1. The invention deals primarily with the induction system for the engine 1 and for that reason only the induction portion of the engine has been illustrated in detail along with certain adjacent components for orientation purposes. In addition, a cross-sectional view taken through a single cylinder of the engine 11 is all that is believed to be necessary to understand the construction and operation of the invention. It is believed obvious to those skilled in the art how the invention can be employed in conjunction with multiple cylinder engines of configuration. Accordingly, this embodiment could be seen as a part of a water-cooled four-cycle parallel four-cylinder four-valve engine having a structure in which a cylinder block 3 and a cylinder head 4 are stacked and joined with a forward inclination on the crank case 2 through head bolts, and the mating plane of the head cover side of the cylinder head 4 is covered with head covers 5. In each of the four cylinder bores 3a formed in the cylinder block 3 is slideably inserted at a piston 7 which is connected with a crank shaft (not shown) through a connecting rod 8. The cylinder head 4 has a lower surface 4a that is matingly engaged with the upper portion of the cylinder block 3 and cylinder bore 3a and which defines a combustion chamber in part by means of a combustion cavity 4b formed in the lower surface of the cylinder head 4. At the centre of the combustion cavity 4b is screwed in an ignition plug 9 and around this ignition plug 9 is disposed each a pair of intake valve openings 4c and exhaust valve openings 4d. On each exhaust valve opening 4d is disposed a valve plate 10 a of an exhaust valve 10 and on each intake valve opening 4c is disposed a valve plate 11a of an intake valve 11 for opening/closing the valve openings 4d, 4c respectively. The valve stems of the exhaust and intake valves 10 and 11 extend aslant upward generally in the direction of the cylinder axis under a definite angle therebetween as seen in the cam shaft direction and exhaust and intake lifters 12, 13 are mounted on the upper end of each of the valve stems 10b and 11 respectively. An exhaust cam shaft 14 and an intake cam shaft 15 extend respectively above each lifter 12, 13 in parallel to each other and perpendicularly to the axis of the cylinder bore, said lifters 12, 13 being driven by the cam shaft 14, 15.

The two exhaust valve openings 4d are led out to the side of the front wall 4f of the cylinder head 4 through a biforcated exhaust passage 16 to the wall surface opening 16a to which an exhaust pipe (not shown) is connected. The two intake valve openings 4c are led out to the side of the rear wall 49 of the cylinder head 4 through a bifurcated intake passage 17 composed of a sub-passage 17g turning inside and a sub-passage 17h turning outside. Within the framework of this application these passages are also designated as primary and secondary intake passages or first and second sub-intake passages, formed in the cylinder head 4. It is to be understood that in this embodiment each combustion chamber is served by such a pair of intake passages 17g, 17h while the present invention may also be employed in conjunction with engines having only a single intake passage for each combustion chamber or more than two intake passages for each combustion chamber. This intake passage 17 extends generally rectangularly to the cam shaft 15 as seen in the direction of the cylinder axis and extends generally straight after being bent obliquely from the intake valve opening 4c to the side of the rear wall 4g of the cylinder head, as seen in the direction of the camshaft.

A manually operated main throttle valve 30 is positioned in a manifold 24 for controlling the speed of the operation of the engine 1 in a known manner. Said manifold 24 is in register with the intake passage 17 through a joint portion 18 which supports an auxiliary throttle valve 27 which is disposed at an opening 17a of the walls of the intake passage 17 extending transversely across the flow of air through the intake passages 17 and the manifold 24. An air cleaner 200 is disposed upstream of the manifold 24.

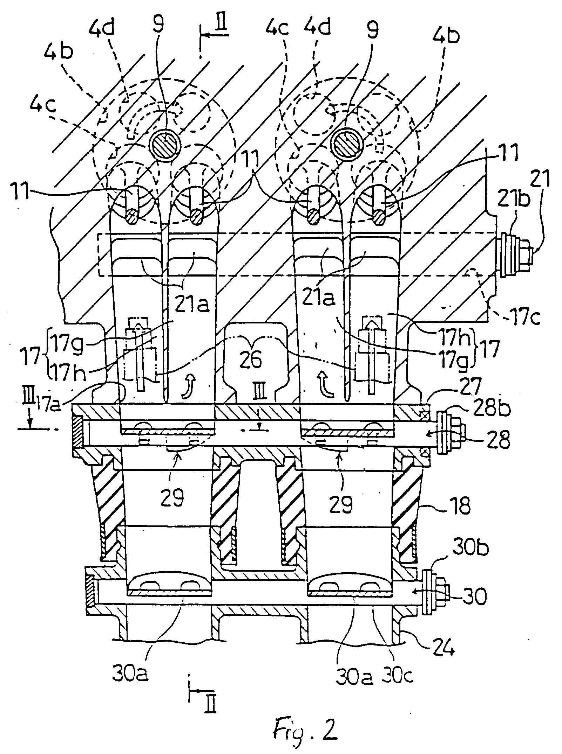

At a bight 17b of the intake passage 17 bent arcutely extends a valve bore 17c in the camshaft direction. That valve bore 17c is formed so as to have its axis positioned near the surface of a bottom wall 17d of the intake passage 17 and closely adjacent to the bight 17b between the stem 11b of the intake valve 11 and a cylinder head bolt at the intake side of the cylinder head 4, said valve bore 17c penetrating two adjacent intake passages 17, i.e. the first and second sub-intake passages 17h, 17g servicing a first cylinder and the first and second sub-intake passages 17g and 17h servicing the neighbouring cylinder as shown in Fig. 2. The valve bore 17c rotatably supports an intake air control valve 21 for varying the cross-section of the flow passage area of said intake passages 17 of the bifurcated type. A pair of left and right control valves 21 is disposed one by one at both sides of a cam chain (not shown) disposed at a centre portion of the engine. Each control valve 21 is formed of a round bar having four valve cutouts 21a and comprising a drive arm 21b fastened to an outer projecting end of the control valve 21. In a fully opened position of the control valve 21 the cutouts 21a form the bottom surface 17d of the wall and a corner of the side wall surface of the intake passage, i.e. of the bifurcated branch passages 17h, 17g. When the control valve 21 is rotated in its fully closed position, these cutouts 21a are effective to throttle the bottom wall side portion of the intake passage 17, leaving its ceiling wall side portion open.

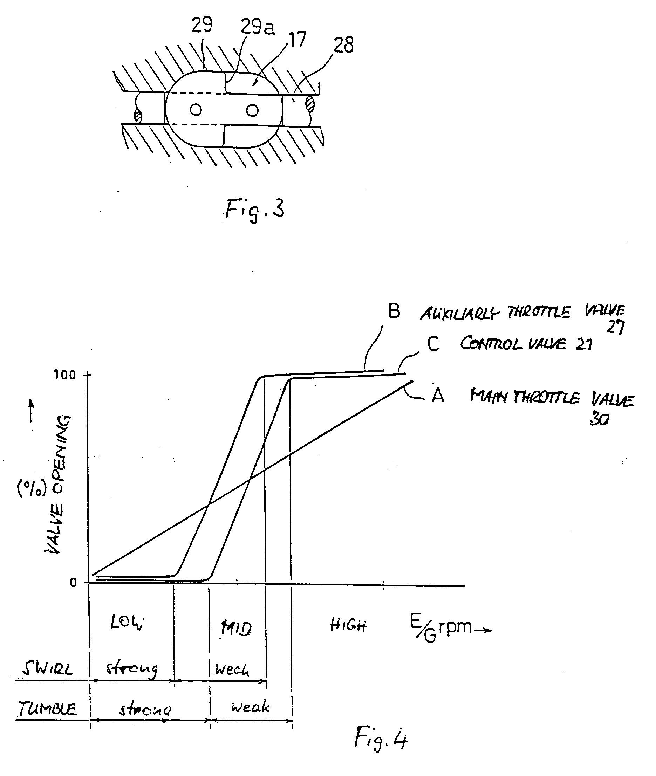

In this embodiment the air/fuel mixture of a charge to be burnt into the respective combustion chambers is formed by injecting fuel by a fuel injector 26 (fuel injection valve) injecting fuel respectively at the ceiling wall side of the first sub-intake passage 17h (turning outside) of the intake passage 17. The injection nozzle of the fuel injector 26 is directed from a fuel injection hole 26a (see Fig. 1) to an intake valve opening 4c of the sub-intake passage 17h for each cylinder of the engine. As is apparent also from other embodiments of the present invention explained below, the invention is not restricted to a fuel injection type engine but, of course, a similar valve arrangement could also be applied to a carburettor type engine. Downstream of the main throttle valve 30 but upstream of the control valve 21 and the fuel injection into the respective sub-intake passage 17h an auxiliary valve 27 is disposed comprising a valve shaft 28 to which an auxiliary valve plate 29 is fastened through bolts for each of the intake passages 17. Said valve shaft 28 is rotatably supported through a valve support member in the camshaft direction and is driven by a drive arm 28b attached to an outwardly projecting end of the valve shaft 28. As shown in Figs. 2 and 3 the auxiliary valve plate 29 is disposed such that a cutout 29a formed at a valve plate portion which is orientated to the outwardly turning sub-intake passage 17h respectively, into which fuel is discharged by the respective fuel injector 26. Therefore, when the auxiliary throttle valve 27, i.e. the auxiliary valve shaft 28, is rotated to its closed position, as shown in Fig. 3, only the second sub-intake passage 17g turning inside, to which the fuel injector 26 does not discharge, is closed.

The main throttle valve 30 has a structure in which a pair of throttle valve plates 30a is fastened through bolts on a throttle valve shaft 30c extending transversely through the manifold side induction passage 24 in the camshaft direction and the throttle valve shaft 30c is driven through a drive arm 30b secured to its outwardly projecting end. That drive arm 30b is connected to a throttle grip 25 through a drive cable 25a (Fig. 1).

In order to control the control valve 21 and the auxiliary throttle valve 27 a valve operating control system 31 is provided comprising a CPU 31a and drive motors (Stepper motors) 31b, 31c connected to the drive arms 28b and 21b of the auxiliary throttle valve 27 and control valve 21 respectively. The CPU 31a receives an input indicative of engine speed as provided by an engine speed sensor that cooperates the engine crank shaft as known and an input indicative of the position of the main throttle valve 30. The Stepper motor 31c is connected by means of a connection B to the drive arm 21b whereas the Stepor motor 31b is connected by means of a connection A to the drive arm 28b that is connected to the auxiliary valve shaft 28. The sequence of cooperation of opening and closing the respective auxiliary throttle valve 27 and control valve 21 may be understood by reference to Fig. 4. The CPU 31a provides the control signals to the Stepper motors 31b, 31c such that the valves 27, 21 may reach their openings shown in Fig. 4 according to the throttle opening and engine speed. By referring to Fig. 4 the function and effect of the valve control system is explained. Fig. 4 shows the relation of the valves 27, 21 and 30 between their fully closed position 0% and their fully opened position 100% in relation to engine speed. Also shown are the respective swirl and tumble conditions. As may be seen, the main throttle valve 30 is opened in linear fashion and during initial opening of the main throttle valve 30, the control valve 21 and, in this embodiment, also the auxiliary throttle valve 27 are maintained closed. While both valves 30, 21 are closed there is both strong swirl and strong tumble. As the engine speed increases then, while still in the low range, the auxiliary throttle valve 27 begins to open. As the auxiliary throttle valve 27 begins to open, the swirl effect will be reduced while tumble will still be maintained strong. Thus, when the engine speed is in the low speed range or when the engine is operating in the low load operating range where the throttle opening is small and the auxiliary throttle valve 27 and the control valve 21 are rotated to their fully closed positions, the auxiliary throttle valve 27 only closes the sub-intake passage 17g and the control valve 21 throttles each intake passage 17g, 17h from its bottom wall side 17d leaving the ceiling wall side portion open. Consequently, the intake air is blown into the combustion chamber with high speed only through the sub-intake passage 17h respectively left open, in a one-sided manner along its ceiling wall, producing swirls flowing from the sub-intake passage side 17h to the opposite side and further produces tumble flowing downward from the ceiling wall side. As afore-mentioned with the opening of the auxiliary throttle valve 27 the swirl effect will be reduced while tumble will be kept strong yet.

When the engine speed increases further and comes into the medium speed range, or when the engine is operating in the medium low range where the throttle opening is medium, at first the auxiliary throttle valve 27 begins to open and then the intake air control valve 21 begins to open. Thus, when a position is reached before the auxiliary throttle valve 27 is fully opened and the control valve 21 has begun to open the tumble will then be weakened and a period where weak tumble and weak swirl are both maintained will occur up through the mid-range performance until all valves are opened, at which time there will be substantially no tumble or swirl. This may provide excellent performance throughout the entire range of engine speed and engine load. In the course of opening the auxiliary throttle valve 27 and, decelerated thereagainst, the control valve 21, the intake air flow into the sub-intake passage 17g gradually increases and the flow along the ceiling wall of the sub-intake passage 17h becomes weaker. Therefore, swirl becomes weaker first and then tumble also becomes weaker until said effects substantially will disappear as afore-mentioned (high speed operating range, high load operating range).

According to this embodiment, as the auxiliary throttle valve 27 closes the second sub-intake passage 17g (turning inside) leaving the first sub-intake passage 17h open (turning outside) while the control valve 21 throttles the intake passage from the bottom wall side 13d leaving the ceiling wall side portion open in the low speed operating range (or low load operating range) as described above, both swirl and tumble can be simultaneously produced in a condition of a low amount of intake air. Therefore, lean mixture combustion can be stabilised by promoting fuel atomisation and uniformisation of the distribution of the air/fuel mixture can be improved, leading to a correspondingly improved lower fuel consumption.

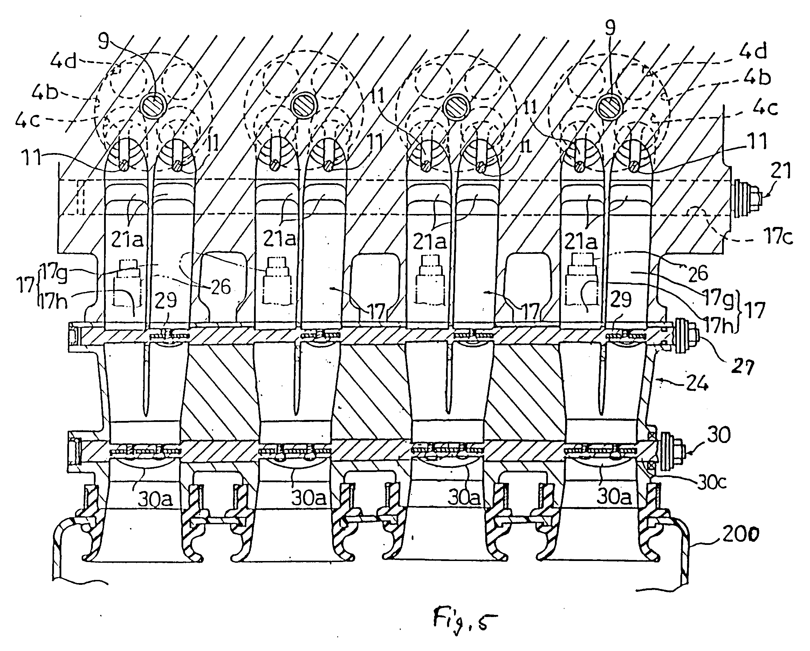

Fig. 5 shows yet another alternative embodiment of the invention which differs from the afore-described embodiment of Figs. 1 to 4 only in the fact that the auxiliary throttle valve 27 in this embodiment has only a single valve plate 29 which cooperates to control the flow through the sub-intake passage 17g. Thus, in this case, the auxiliary throttle valve 27 was shifted to a more downward position, i.e. to the bifurcated area of the intake passage 17. In this way the restriction of flow through the sub-intake passage 17h is very low under all conditions and hence even better volumetric efficiency can be achieved.

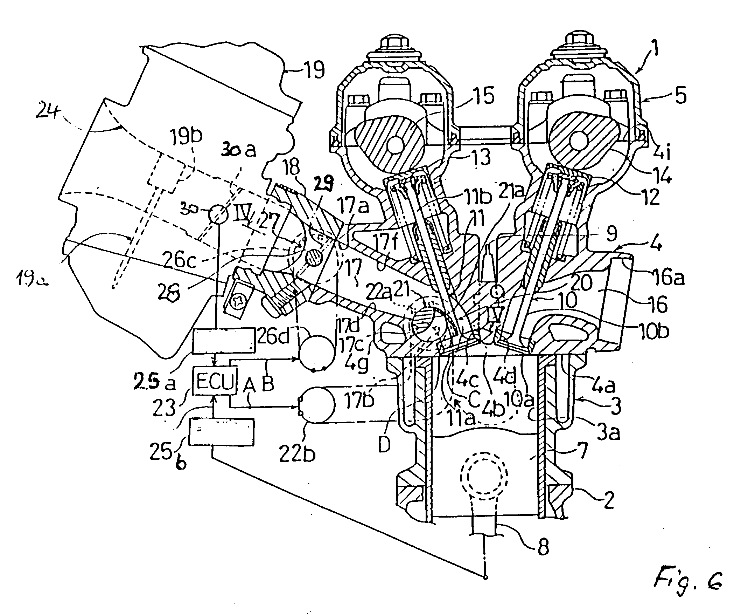

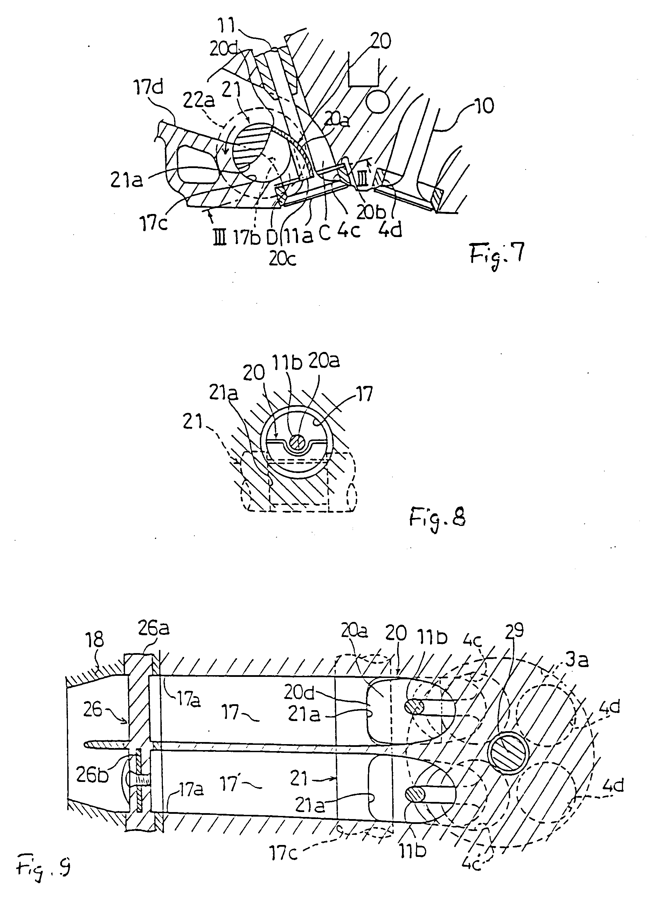

Another embodiment of the present invention is explained hereinafter referring to Figs. 6 to 10. Substantially the engine and its basic construction complies with that above-described above with respect to Figs. 1 to 4 and, therefore, a repetitious explanation of said basic structure of the engine is not considered to be necessary and is, therefore, omitted. Like parts as in the above-mentioned first embodiment are denoted with the same reference numerals also in the embodiment hereinafter described with reference to Figs. 6 to 10.

In this embodiment the induction system includes a charge former 19 in the form of a variable venturi carburettor which draws atmospheric air from an air cleaner (not shown). The carburettor 19 is formed with an intake passage 24 in which a sliding throttle piston 19b is automatically operated through the intake vacuum of the engine, said throttle piston 19b being supported for reciprocation. The piston 19b is operated to maintain a constant pressure drop through the intake passage 24 regardless of the running speed of the engine. In addition a metering rod 19a is affixed to the throttle piston 19b for controlling the supply of fuel delivered to the manifold induction passage 24 by the idle and main circuits (not shown) of the carburettor 19. The manually operated main throttle valve 30 is positioned in the carburettor intake passage 24 for controlling the speed of operation of the engine 1 in a known manner. The carburettor 19 is of the type normally used in a motor cycle and the engine 1 in this embodiment may be employed to drive a motor cycle. Of course, the invention may be practised in conjunction with other applications for internal combustion engines. This embodiment, however, has particular utility in conjunction with engines that operate over widely varying speed and load ranges.

The carburettor 19 supplies its air/fuel charge to a short Siamese type intake manifold 18 that has a single inlet opening that registers with the carburettor intake passage 24 and a pair of outward openings which respectively communicate with the inlet openings of the pair of intake passages 17g, 17h formed in the cylinder head 4. In this embodiment each combustion chamber is served by the pair of intake passages 17h, 17g with the intake passage 17h being considered as the primary or first sub-intake passage and the intake passage 17g being considered as the secondary sub-intake passage. As noted above, also this embodiment can be employed in conjunction with engines having only a single intake passage for each combustion chamber or more than than two intake passages for each combustion chamber. Again each of the intake passages 17h, 17g has a generally L-shaped configuration with a straight section running from the inlet openings that communicate with the manifold 18 and a shorter section that is angularly disposed to the first section and which communicates directly with the combustion chamber 4b. These sections meet at a bight at which again the control valve 21 is rotatably supported.

This embodiment is to further enhance generating a tumble and/or swirl action in the combustion chamber 4b under low and mid range operations. The flow path of the intake charge entering the combustion chamber 4b from the intake passages 17h, 17g is varied under certain running conditions so as to induce turbulence, improving flame propogation and to ensure complete combustion within the combustion chamber 4b, even under extreme idle and low speed conditions. For this reason, in addition to the provision of the control valve 21 and the auxiliary throttle valve 27, a rectifier plate arrangement 20 is positioned in the primary intake passage 17h. The intake air control valve 21 can be rotated between its fully opened position, at which the valve portion 21a is immersed in the valve bore 17c to be flush with the inner surface of the corresponding intake passage, and its fully closed position, at which the valve cutout 21a is erected from the bottom wall 17d nearly perpendicular to throttle the intake passage 17 nearly to one-half. In this case the control valve 21 rotates so that the outer periphery of the cutouts 21a may be positioned on the upstream side. In the intake manifold 18 is disposed the auxiliary throttle valve 27, the valve shaft 28 of which extends in parallel to the control valve 21 and supports a valve plate 29 to open or close the secondary intake passage 17g.

At the outer end portion of the control valve 21 is secured a control pulley 22a which is connected to the drive pulley 22b secured to a control motor through a cable. To the outer end portion of the auxiliary throttle valve 27 is secured a changeover pulley 27c which is connected to the drive pulley 27d secured on a changeover motor through a cable. The rotations of the control motors are controlled by an ECU 23 which again receives a main throttle opening representing signal of the main throttle valve 30 from a throttle opening sensor 25a and the engine speed representing signal from the rotation sensor 25b. The ECU 23 outputs a control signal A to the control motor for rotating the control valve 21 towards its fully closed position as the amount of intake air becomes smaller as is the case within the low to medium speed/low to medium load engine operating ranges or toward its fully open position as the amount of intake air becomes larger as is the case within the high speed/high load engine operating range. Moreover, the CPU outputs another control signal B to the changeover motor indicated above to close the auxiliary throttle valve 27 in the engine operating range where the amount of intake air is smaller than a specified value or to open the auxiliary throttle valve 27 in an engine operating range where the amount of intake air exceeds the specified value mentioned above. In order to further improve tumble motion a partitioning rectifer plate arrangement 20 is provided in the intake passage 17h to which the valve plate 29 of the auxiliary throttle valve 27 is not orientated and said partition plate or rectifier plate arrangement 20 is disposed downstream of the intake air control valve 21. The partition plate arrangement 20 is composed of a tongue-like partition plate portion 20a and a cylindrical base portion 20b which forms an angular holder ring and is secured on the downstream end portion of the partition plate portion 20a. Said cylindrical base portion 20b is caught and held at its holder ring portion by a valve seat of an intake valve 11, fitted and mounted in the intake valve opening 4c. The reference numeral 20c denotes a groove formed for avoiding any interference between the partition plate 20 and the valve stem 11a of the intake valve 11. The partition plate portion 20a extends generally along a centre line of the intake passage 17h and has a width nearly equal to that of the intake passage 17h to divide it into two portions, one on each side of the axis of the intake valve 11.

As may be apparent from Figs. 6 and 7, when the control valve 21 rotates from is fully open position in a clockwise direction the cutout 21a is positioned so that it will contact an upper edge 20d of the rectifier plate portion 20a and, thus, provide an effective seal across this side of the intake passage 17g so as to substantially preclude any flow through said one side of the intake passage 17g. As a result, substantially all of the flow will be channelled to the other side so as to further promote the tumble operation. In addition, this contact of the control valve cutout 21a with the rectifier plate edge 20d will act as a stop so as to limit the degree of rotation of the control valve 21 into its flow controlling position.

In addition to this advantage, in should be noted that the flow controlling position of the control valve 21 is such that there is no cavity formed in the intake passage upstream of the control valve 21 when in its flow controlling position in which fuel could tend to condense and accummulate. When the control valve 21 is in its fully closed position abutting against the upper edge 20d of the rectifer plate portion 20a the cutout 21a of the control valve 21 forms a continuous surface with the rectifier plate portion 20a. With such a structure, the partition plate portion 20a divides the intake passage 17h into the ceiling wall side portion C and the bottom wall side portion D.

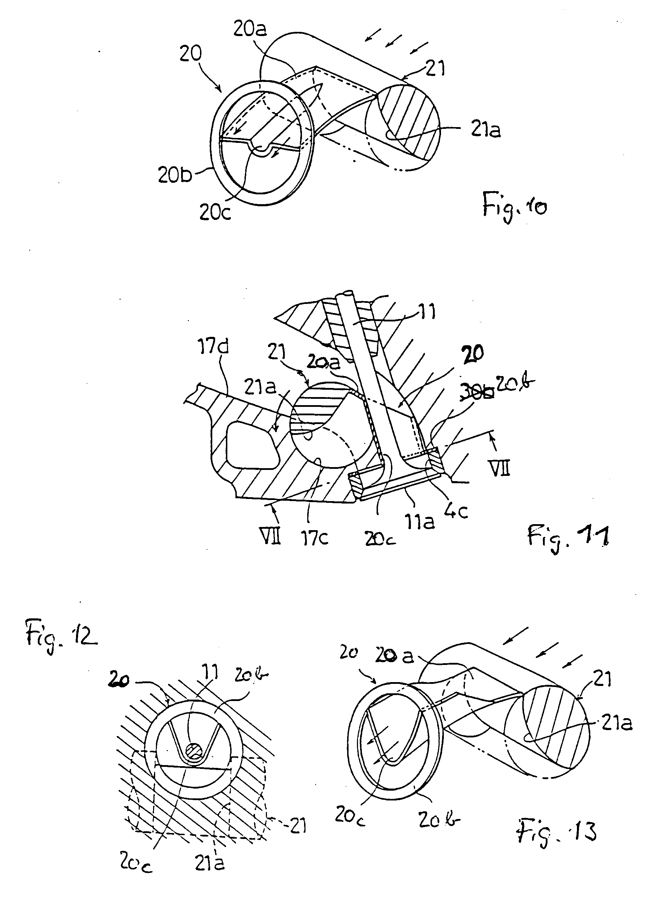

Although a wide variety of control strategies may be employed, preferably the ECU 23 positions the auxiliary throttle valve 27 in its closed position and the control valve 21 in its flow controlling position when the engine is operating at idle or off idle. This induces maximum turbulence in the combustion chamber and a helical flow pattern so as to ensure rapid flame propagation when the spark plug 9 is fired and so as to also ensure that a stoichiometric fuel/air mixture will be present at the gap of the spark plug 9 at the time of ignition. In such a position the intake air is concentrated into the remaining intake passage 17h and only flows into the cylinder through the upper side intake valve opening 4c of Figure 9. Moreover, it only flows through the sealing wallside portion C of the passage 17h divided by the rectifier plate arrangement 20. Consequently, a direction of the flow of intake air can be obtained even when the amount of intake air is small and a helical flow pattern is produced in which the intake air flows along the cylinder inner surface laterally as seen in the direction of the cylinder axis and flows longitudinally along the axis of the cylinder as seen in the camshaft direction.

As the engine speed and/or load increases the auxiliary throttle valve 27 is first opened while the control valve 21 is still maintained in its flow controlling position. This changes the motion within the combustion chamber 4b from the helical flow pattern to a tumble type of flow pattern. Then, as the speed and load further increase, the control valve 21 is positioned in its open position so as to permit unresricted flow into the combustion chamber 4b and maximum volumetric efficiency. As has been noted, this is only a preferred sequence of operation and whereas other sequences of operation may be employed depending upon the type of motion desired in the combustion chamber 4b under various running conditions.

In the embodiment of Figures 6-10, the rectifier plate portion 20a had the effect of dividing the primary intake passage 17h into two substantially equal flow areas. Figures 11-13 show another embodiment of the invention wherein the configuration of the rectifier plate arrangement is such as to provide a substantially smaller flow area than one-half through the intake passage 17h when the control valve 21 is in its closed position.

By the way, although this invention is applied to a motor cycle engine provided with a carburettor in the embodiment mentioned above, it may of course also be applied to an automobile engine.

In the afore-mentioned case of the embodiment of Figures 11-13 the partitioning plate portion 20c of the rectifier plate arrangement 20 extends outwardly from the cylindrical base portion 20b and has a generally V-shaped configuration terminating a generally flat upstream portion 20a which forms a plane generally continued from the cut out 21a of the intake air control valve 21, said upstream and forming also a stopper for limiting the movement of the cut out 21a of the control valve 21 into its flow controlling position. The V-shape of the plate portion 30c defines a relatively small flow area which is directed more towards the centre of the cylinder and which will generate a higher flow velocity and more tubulence then created in the previously described embodiment. As in the previously described embodiments, such a rectifier plate can be positioned in only one of a plurality of intake passage serving the same cylinder or, alternatively, may be provided in all of the intake passages serving the same cylinder. In addition, such a configuration may be employed in engines having only one intake passage per cylinder.

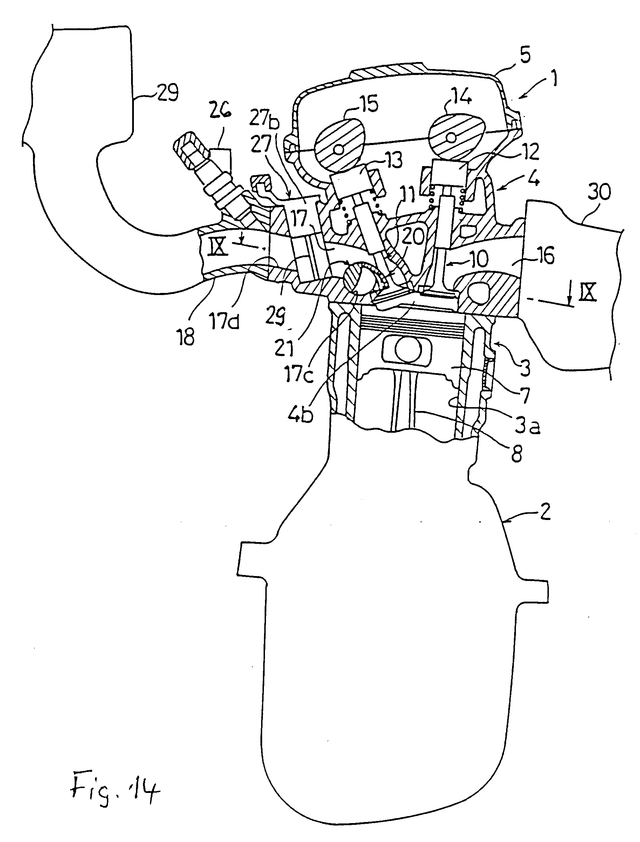

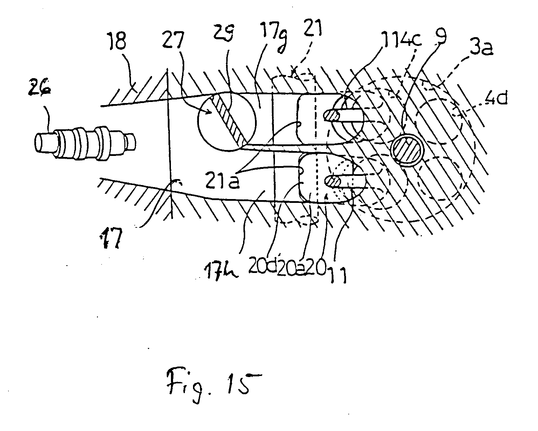

Figures 14 and 15 illustrate another embodiment which is generally the same as the previously described ones and, for that reason, components of this embodiment which are the same or substantially the same have been identified by the same reference numerals and will not be described again, except in so far as is necessary to understand the construction and operation of this embodiment.

In that case, the engine is designed primarily for automotive application. The engine 1 is provided with an induction system comprising a plenum chamber 29. The intake passage is bifurcated into the intake passages 17h and 17g and the auxiliary throttle valve 27 for opening/closing the lower side of the intake passage 17h is disposed at their joining portion. In this embodiment a fuel/air charge is generated by the fuel injector 26 which is mounted to each manifold runner 18 and which sprays fuel therein under an appropriate control strategy.

In the previous described embodiment the auxiliary throttle valve 27 had a shaft portion 28 extended through the primary intake passage 17h and, thus, provided some, although minimal, flow resistance in this passage. The advantage of the construction of the previously described embodiments was that all of the auxiliary throttle valves 27 could be fixed to a common throttle valve shaft 28. However, in this embodiment the auxiliary throttle valve arrangement 27 is provided for each cylinder of the engine separately. This auxiliary throttle valve 27 has a structure in which its valve plate 29 is secured on one end of its shaft portion 28 which is inserted into the intake passge 17h from above and is rotatable about a vertical axis. As shown in Figure 15, the valve plate 29, when in its closed position, substantially precludes any flow through the secondary intake passage 17g and, hence, will divert all of the flow through the primary intake passage 17h with the effect as afore-mentioned. When the auxiliary throttle valve 27 is rotated the valve plate 29 will extend parallel to the flow path and provide only minimal resistance.

Each of the throttle valves 27 is provided with an outwardly extending arm which allows all auxiliary throttle valves 27 of the engine to be interconnected to each other as to provide simultaneous movement therebetween.

Thus, this embodiment means that the engine has three steps of different intake flow patterns beyond the full range of engine speed. Namely, the first stage is acquired when the valve plate 29 assumes its closed position and control valve 21 also assumes its closed position, whereas the second stage is obtained when the valve plate 29 assumes its closed position and the control valve 21 assumes its open position while finally, the third stage is characterized in that all valves including the valve plate 29 and the control valve 21 assumes its open position.

The fuel injection valve 26 may be set so as to inject fuel nearly toward the space between the rectifier plate arrangement 20 and the sealing wall of the associated intake passage 17h.

Although the intake air is directed to flow through one of the intake passages while providing the other intake passage with an auxiliary throttle valve, the method for directing the intake flow of air is not limited to that disposal of the auxiliary throttle valve 27 as described above. For example, similar concentration of the air flow can be realised by stopping the operation of one intake valve at its closed state. In this case the rectifier plate arrangement 20 is disposed in the intake passage on the side where the operation of the intake valve is not stopped.

## Claims

1. Induction system for an internal combustion engine having a cylinder head (4) and a cylinder block (3), said cylinder head (4) at least partially defining a combustion chamber, and an intake passage arrangement (17) for each cylinder to serve a plurality of intake valves (11), with a main throttle valve arrangement (30) being provided at an upstream side of the intake passage arrangement (17), wherein said intake passage arrangement (17) is controlled by an intake air control valve (21) for varying the cross section of the flow passage area of said intake passage arrangement (17), which is rotatably supported at the lower side of the intake passage arrangement (17) in the cylinder head (4), the engine being considered in an upright position with the cylinder head (4) at the top of it, the axis of the control valve (21) extends transversely to the flow path of an intake charge flowing through the intake passage arrangement (17) and in the direction of the axis of an overhead camshaft (15), said control valve (21) being disposed at least in the vicinity of an end portion of the intake passage (17) close to the combustion chamber (4b), and wherein, an auxiliary throttle valve (27) is disposed between the main throttle valve (30) and the control valve (21) to control at least a part of the cross section of the intake passage arrangement (17), said auxiliary throttle valve (27) being designed to prevent an obstruction of at least a part of the cross section of the intake passage (17) irrespective of the angular position of the auxiliary throttle valve (27), but to obstruct the flow through a remainder part of the cross section of the intake passage (17) in a fully closed position of the auxiliary throttle valve (27).

2. Induction system as claimed in claim 1, **characterized in that** a valve operating control system (31) is provided to operate said control valve (21) and said auxiliary throttle valve (27) in response to engine running conditions so as to close said valves (21,27) in the range of low to medium engine speed or engine load.

3. Induction system as claimed in claims 1 or 2, **characterized in that**, the control valve (21) comprises a rod shaped valve body having control cut-outs (21a) for controlling a plurality of intake passages (17g, 17h) of a single cylinder of the engine.

4. Induction system as claimed in at least one of the preceding claims 1-3, **characterized in that**, the control valve (21) is arranged to control, a plurality of intake passages (17) of a plurality of cylinders of the engine.

5. Induction system as claimed in at least one of the preceding claims 1-4, **characterized in that**, said intake passage arrangement comprises a bifurcated intake passage (17,17h,17g) for each cylinder of the engine.

6. Induction system as claimed in at least one of the preceding claims 1-5, **characterized in that**, the auxiliary control valve (27) is disposed upstream of a bifurcated area of the intake passage (17) having a common auxiliary valve shaft (28) for all intake passages (17) of a multi-cylinder engine, said auxiliary valve shaft (28) supporting for each cylinder a valve plate (29) having a cut-out (29a) which is oriented to said passage (17h) of the bifurcated intake passage (17) served by a fuel injector (26) so as to leave said branch passage (17h) of the bifurcated intake passage (17) unobstructed under all angular positions of the auxiliary control valve (27).

7. Induction system as claimed in at least one of the preceding claims 1-5, **characterized in that**, the auxiliary control valve (27) comprises a common auxiliary valve shaft (28) for all intake passges (17) of a multi-cylinder engine, said auxiliary valve shaft (28) being disposed to extend across through the bifurcated downstream side of the intake passage (17,17h,17g), supporting an auxiliary valve plate (29) in compliance with said branch passage (17g) of the bifurcated intake passage (17) which is not serviced by a fuel injector (26).

8. Induction system as claimed in at least one of the preceding claims 1-7, **characterized in that**, a rectifier plate arrangement (20) is disposed in a downstream end portion of at least a part of the intake passage (17).

9. Induction system as claimed in claim 8, **characterised in that** said rectifier plate arrangement (20) extends from a valve seat portion of an intake valve assembly (11) upwardly into the intake passage (17).

10. Induction system as claimed in at least one of the preceding claims 8 or 9, **characterised in that** said rectifier plate divides a primary intake passage (17) into two substantially equal flow areas.

11. Induction system as claimed in at least one of the preceding claims 8-10, **characterised in that** said rectifier plate portion (20) provides a flow area substantially smaller than one half of the cross-section of the intake passage (17) when the control valve (21) is in its closed position.

12. Induction system as claimed in at least one of the preceding claims 8-11, **characterised in that** the cross-section of an upper part of the intake passage (17,17g, 17h) defined by the rectifier plate portion (20a) is decreasing toward the opening of the intake passage (17,17g,17h) to the combustion chamber.

13. Induction system as claimed in at least one of the preceding claims, 1-12, **characterised in that** the engine has three stages of different intake flow beyond the full range of engine speed, wherein the first stage is acquired when the valve plate (29) assumes its closed position and the control valve (21) assumes also its closed position, whereas the second stage is obtained when the valve plate (29) assumes its closed position and the control valve (21) assumes its open position, while the third stage is adjusted when all valves including the valve plate (29) and the control valve (21) assume their open position.

14. Induction system as claimed in at least one of the preceding claims 1-13, **characterised in that** the control valve (21) is disposed between head bolts for bolting the cylinder head (4) to the cylinder block (3) and the intake valve (11).

## Patentansprüche

1. Einlaßsystem für einen Verbrennungsmotor mit einem Zylinderkopf (4) und einem Zylinderblock (3), wobei der Zylinderkopf (4) zumindest teilweise eine Brennkammer begrenzt, und einer Einlaßkanalanordnung (17) für jeden Zylinder, um eine Mehrzahl von Einlaßventile (11) zu beschicken, wobei eine Hauptdrosselventil-Anordnung (30) auf einer stromaufwärtigen Seite der Einlaßkanalanordnung (17) vorgesehen ist, wobei die Einlaßkanalanordnung (17) durch ein Ansaugluft-Steuerventil (21) zur Veränderung des Querschnitts der Strömungskanalfläche der Einlaßkanalanordnung (17) gesteuert ist, welches an der unteren Seite der Einlaßkanalanordnung (17) drehbar in dem Zylinderkopf (4) gelagert ist, wobei der Motor in einer aufrechten Stellung mit dem Zylinderkopf (4) an dessen Oberseite betrachtet wird, die Achse des Steuerventils (21) sich quer zu dem Strömungsweg einer Einlaßladung, die durch die Einlaßkanalanordnung (17) strömt, und in der Richtung der Achse einer obenliegenden Nockenwelle (15) erstreckt, wobei das Steuerventil (21) zumindest in der Nähe eines Endabschnittes des Einlaßkanals (17) nahe der Brennkammer (4b) angeordnet ist, und wobei ein Hilfs-Drosselventil (27) zwischen dem Hauptdrosselventil (30) und dem Steuerventil (21) angeordnet ist, um zumindest einen Teil des Querschnitts der Einlaßkanalanordnung (17) zu steuern, wobei das Hilfs-Drosselventil (27) vorgesehen ist, ein Versperren zumindest eines Teiles des Querschnitts des Einlaßkanals (17) ungeachtet der Winkelstellung des Hilfs-Drosselventils (27) zu verhindern, jedoch die Strömung durch einen restlichen Teil des Querschnitts des Einlaßkanals (17) in einer vollständig geschlossenen Stellung des Hilfs-Drosselventiles (27) zu sperren.

2. Einlaßsystem nach Anspruch 1, **dadurch gekennzeichnet**, daß ein Ventilbetätigungs-Steuersystem (31) vorgesehen ist, das Steuerventil (21) und das Hilfs-Drosselventil (27) in Abhängigkeit von Motorbetriebsbedingungen zu steuern, um die Ventile (21, 27) im Bereich niedriger bis mittlerer Motordrehzahl oder Motorlast zu schließen.

3. Einlaßsystem nach Anspruch 1 oder 2, **dadurch gekennzeichnet**, daß das Steuerventil (21) einen stabförmigen Ventilkörper aufweist, der Steuerausnehmungen (21a) zur Steuerung einer Mehrzahl von Einlaßkanälen (17g, 17h) eines einzelnen Zylinders des Motors besitzt.

4. Einlaßsystem nach zumindest einem der vorhergehenden Ansprüche 1-3, **dadurch gekennzeichnet**, daß das Steuerventil (21) vorgesehen ist, eine Mehrzahl von Einlaßkanälen (17) einer Mehrzahl von Zylindern des Motors zu steuern.

5. Einlaßsystem nach zumindest einem der vorhergehenden Ansprüche 1-4, **dadurch gekennzeichnet**, daß die Einlaßkanalanordnung einen sich gabelnden Einlaßkanal (17, 17h, 17g) für jeden Zylinder des Motors aufweist.

6. Einlaßsystem nach zumindest einem der vorhergehenden Ansprüche 1-5, **dadurch gekennzeichnet**, daß das Hilfssteuerventil (27) stromaufwärts eines gegabelten Bereichs des Einlaßkanals (17) angeordnet ist und einen gemeinsamen Hilfsventilschaft (28) für alle Einlaßkanäle (17) eines Mehrzylindermotors aufweist, wobei der Hilfsventilschaft (28) für jeden Zylinder eine Ventilplatte (29) trägt, die eine Ausnehmung (29a) aufweist, die zu dem Kanal (17h) des sich gabelnden Einlaßkanales (17) ausgerichtet ist, der durch eine Kraftstoffeinspritzvorrichtung (26) beschickt wird, um den Zweigkanal (17h) des sich gabelnden Einlaßkanals (17) unter allen Winkelstellungen des Hilfssteuerventiles (27) unversperrt zu lassen.

7. Einlaßsystem nach zumindest einem der vorhergehenden Ansprüche 1-5, **dadurch gekennzeichnet**, daß das Hilfssteuerventil (27) einen gemeinsamen Hilfsventilschaft (28) für alle Einlaßkanäle (17) eines Mehrzylindermotors aufweist, wobei der Hilfsventilschaft (28) angeordnet ist, sich quer durch die sich gabelnde stromabwärtige Seite des Einlaßkanals (17, 17h, 17g) zu erstrecken, und eine Hilfsventilplatte (29) entsprechend dem Zweigkanal (17g) des sich gabelnden Einlaßkanals (17) trägt, der durch eine Kraftstoffeinspritzvorrichtung (26) nicht beschickt wird.

8. Einlaßsystem nach zumindest einem der vorhergehenden Ansprüche 1-7, **dadurch gekennzeichnet**, daß eine Richtplattenanordnung (20) in einem stromabwärtigen Endabschnitt zumindest eines Teiles des Einlaßkanals (17) angeordnet ist.

9. Einlaßsystem nach Anspruch 8, **dadurch gekennzeichnet**, daß die Richtplattenanordnung (20) sich von einem Ventilsitzabschnitt einer Einlaßventilanordnung (11) nach oben in den Einlaßkanal (17) erstreckt.

10. Einlaßsystem nach zumindest einem der vorhergehenden Ansprüche 8 oder 9, **dadurch gekennzeichnet**, daß die Richtplatte einen Haupteinlaßkanal (17) in zwei im wesentlichen gleiche Strömungsbereiche teilt.

11. Einlaßsystem nach zumindest einem der vorhergehenden Ansprüche 8-10, **dadurch gekennzeichnet**, daß der Richtplattenabschnitt (20) einen Strömungsbereich schafft, der im wesentlichen kleiner ist als der halbe Querschnitt des Einlaßkanals (17), wenn das Steuerventil (21) in seiner geschlossenen Position ist.

12. Einlaßsystem nach zumindest einem der vorhergehenden Ansprüche 8-11, **dadurch gekennzeichnet**, daß der Querschnitt eines oberen Teiles des Einlaßkanals (17, 17g, 17h), der durch den Richtplattenabschnitt (20a) begrenzt ist, zu der Öffnung des Einlaßkanales (17, 17g, 17h) zu der Brennkammer hin abnimmt.

13. Einlaßsystem nach zumindest einem der vorhergehenden Ansprüche 1-12, **dadurch gekennzeichnet**, daß der Motor drei Stufen unterschiedlicher Einlaßströmung über den ganzen Motordrehzahlbereich aufweist, wobei die erste Stufe erhalten wird, wenn die Ventilplatte (29) ihre geschlossene Stellung einnimmt und das Steuerventil (21) ebenfalls seine geschlossene Stellung annimmt, während die zweite Stufe erhalten wird, wenn die Ventilplatte (29) ihre geschlossene Stellung einnimmt und das Steuerventil (21) seine geöffnete Stellung einnimmt, während die dritte Stufe eingestellt wird, wenn alle Ventile einschließlich der Ventilplatte (29) und des Steuerventiles (21) ihre geöffnete Stellung einnehmen.

14. Einlaßsystem nach zumindest einem der vorhergehenden Ansprüche 1-13, **dadurch gekennzeichnet**, daß das Steuerventil (21) zwischen Kopfbolzen zum Festschrauben des Zylinderkopfes (4) an dem Zylinderblock (3) und dem Einlaßventil (11) angeordnet ist.

## Revendications

1. Système d'admission pour un moteur à combustion interne comprenant une culasse (4) et un bloc-cylindres (3), ladite culasse (4) délimitant au moins partiellement une chambre de combustion, et un agencement de passage d'admission (17) vers chaque cylindre qui dessert une pluralité de soupapes d'admission (11), et comporte un agencement formant papillon principal (30) monté du côté amont de l'agencement (17) du passage d'admission, dans lequel ledit agencement (17) du passage d'admission est commandé par une soupape (21) de commande d'admission d'air pour faire varier la surface de la section transversale du passage d'écoulement dudit agencement (17) du passage d'admission, laquelle soupape est supportée à rotation du côté inférieur de l'agencement (17) du passage d'admission dans la culasse (4), le moteur étant considéré en position verticale avec la culasse (4) à sa partie supérieure, l'axe de la soupape de commande (21) s'étend transversalement à la trajectoire d'écoulement d'une charge d'admission passant par l'agencement (17) du passage d'admission et dans la direction de l'axe d'un arbre à cames (15) monté au-dessus, ladite soupape de commande (21) étant montée au moins au voisinage d'une partie d'extrémité du passage d'admission (17) près de la chambre de combustion (4b), et dans lequel un papillon auxiliaire (27) est monté entre le papillon principal (30) et la soupape de commande (21) pour commander au moins une partie de la section transversale de l'agencement (17) du passage d'admission, ledit papillon auxiliaire (27) étant construit pour empêcher une obstruction d'au moins une partie de la section transversale du passage d'admission (17) quelle que soit la position angulaire du papillon auxiliaire (27), mais pour faire obstruction à l'écoulement à travers la partie restante de la section droite du passage d'admission (17) lorsque le papillon auxiliaire (27) est en position complètement fermée.

2. Système d'admission selon la revendication 1, caractérisé en ce qu'un système (31) de commande du fonctionnement des soupapes est prévu pour faire fonctionner ladite soupape de commande (21) et ledit papillon auxiliaire (27) en réponse à des conditions de fonctionnement du moteur de manière à fermer lesdites soupapes (21, 27) pour la gamme des vitesses et des charges faibles à moyennes du moteur.

3. Système d'admission selon la revendication 1 ou 2, caractérisé en ce que la soupape de commande (21) comprend un corps de soupape de forme allongée présentant des découpes de commande (21a) pour commander une pluralité de passages d'admission (17g, 17h) d'un seul cylindre du moteur.

4. Système d'admission selon au moins l'une des revendications précédentes 1 à 3, caractérisé en ce que la soupape de commande (21) est agencée pour commander une pluralité de passages d'admission (17) d'une pluralité de cylindres du moteur.

5. Système d'admission selon au moins l'une des revendications précédentes 1 à 4, caractérisé en ce que ledit agencement du passage d'admission comprend un passage d'admission fourchu (17, 17h, 17g) pour chaque cylindre du moteur.

6. Système d'admission selon au moins l'une des revendications précédentes 1 à 5, caractérisé en ce que la soupape auxiliaire de commande (27) est montée en amont d'une région fourchue du passage d'admission (17) comprenant un corps de soupape auxiliaire (28) commun à tous les passages d'admission (17) d'un moteur à plusieurs cylindres, ledit corps de soupape auxiliaire (28) supportant pour chaque cylindre une soupape plate (29) ayant une découpe (29a) qui est orientée vers ledit passage (17h) du passage d'admission fourchu (17) desservi par un injecteur de carburant (26) de manière à laisser sans obstruction ledit passage de branche (17h) du passage d'admission fourchu (17) dans toutes les positions angulaires de la soupape auxiliaire de commande (27).

7. Système d'admission selon au moins l'une des revendications précédentes 1 à 5, caractérisé en ce que la soupape auxiliaire de commande (27) comprend un corps de soupape auxiliaire commun (28) à tous les passages d'admission (17) d'un moteur à plusieurs cylindres, ledit corps de soupape auxiliaire (28) étant monté transversalement par rapport au côté aval fourchu du passage d'admission (17, 17h, 17g), supportant une soupape auxiliaire plate (29) en correspondance avec ledit passage de branche (17g) du passage fourchu d'admission (17) qui n'est pas desservi par un injecteur de carburant (26).

8. Système d'admission selon au moins l'une des revendications précédentes 1 à 7, caractérisé en ce qu'une plaque de redressement (20) est montée dans une partie d'extrémité aval d'au moins une partie du passage d'admission (17).

9. Système d'admission selon la revendication 8, caractérisé en ce que ladite plaque de redressement (20) part d'une partie du siège de soupape d'un ensemble de soupape d'admission (11) vers le haut à l'intérieur du passage d'admission (17).

10. Système d'admission selon au moins l'une des revendications précédentes 8 et 9, caractérisé en ce que ladite plaque de redressement partage un passage primaire d'admission (17) en deux régions d'écoulement sensiblement égales.

11. Système d'admission selon au moins l'une des revendications précédentes 8 à 10, caractérisé en ce que ladite partie de plaque de redressement (20) établit une surface d'écoulement sensiblement inférieure à' la moitié de la section transversale du passage d'admission (17) lorsque la soupape de commande (21) est dans sa position fermée.

12. Système d'admission selon au moins l'une des revendications précédentes 8 à 11, caractérisé en ce que la section transversale d'une partie supérieure du passage d'admission (17, 17g, 17h) définie par la partie de plaque de redressement (20a) diminue en direction de l'ouverture du passage d'admission (17, 17g, 17h) vers la chambre de combustion.

13. Système d'admission selon au moins l'une des revendications précédentes 1 à 12, caractérisé en ce que le moteur comprend trois étapes à débits d'admission différents au-delà de toute la gamme de vitesses du moteur, dans lequel la première étape est atteinte quand la soupape plate (29) prend sa position fermée et que la soupape de commande (21) prend aussi sa position fermée, tandis que la seconde étape est atteinte quand la soupape plate (29) prend sa position fermée et la soupape de commande (21) prend sa position ouverte, alors que la troisième étape est ajustée quand toutes les soupapes, y compris la soupape plate (29) et la soupape de commande (21) prennent leur position ouverte.

14. Système d'admission selon au moins l'une des revendications précédentes 1 à 13, caractérisé en ce que la soupape de commande (21) est montée entre la culasse et la soupape d'admission (11) pour boulonner la culasse (4) sur le bloc-cylindres (3).
